# EUROPÄISCHE PATENTSCHRIFT

(11) **EP 3 080 477 B1**
(45) Veröffentlichungstag und Bekanntmachung des Hinweises auf die Patenterteilung: **24.02.2021**
(21) Anmeldenummer: 14806218.5
(22) Anmeldetag: 25.11.2014
(51) Int. Cl.: F16F 9/05

(54) **LUFTFEDERKOMPONENTE**
PNEUMATIC SPRING COMPONENT
ÉLÉMENT RESSORT PNEUMATIQUE

(30) Priorität: 10.12.2013 DE 102013113737
(43) Veröffentlichungstag der Anmeldung: 19.10.2016
(73) Patentinhaber: Vibracoustic AG, 64293 Darmstadt (DE)
(72) Erfinder: HECHENBLAIKNER, Jörg, 21376 Salzhausen (DE); LANGOWSKI, Oliver, 21033 Hamburg (DE)
(74) Vertreter: Patentanwälte Olbricht Buchhold Keulertz
(86) Internationale Anmeldenummer: PCT/EP2014/075576
(87) Internationale Veröffentlichungsnummer: WO 2015/086315

(56) Entgegenhaltungen:
- EP-A1- 1 589 253
- WO-A1-98/46370
- DE-A1- 10 250 751
- DE-A1-102007 035 640
- DE-A1-102011 050 103
- JP-A- 2009 127 682
- JP-U- H0 594 547
- US-A- 5 298 713

## Beschreibung

Die vorliegende Erfindung betrifft eine Luftfederkomponente, insbesondere Abrollkolben, Zusatzvolumenbehälter für einen Abrollkolben oder Luftfedertopf.

Luftfedern dienen zur Abfederung zweier zueinander beweglicher Fahrzeugteile, aber auch zur Veränderung der Niveaulage eines Fahrzeugs. Typische Luftfedern weisen einen mit Luft gefüllten Luftfederbalg aus Gummi auf, der luftdicht durch ein oberes Abschlusselement und einen Abrollkolben abgeschlossen ist. Das Abschlusselement und der Abrollkolben werden auch als Luftfederkomponenten bezeichnet. Bei einer Belastung rollt sich der Luftfederbalg an der Außenfläche des Abrollkolbens ab. Über den Abrollkolben erfolgt zudem die Anbindung der Luftfeder an einem Fahrzeugteil.

Die Federwirkung von Luftfedern beruht auf der Kompressibilität von Luft. Somit ist die Federhärte vom Volumen der eingeschlossenen Luft und deren Druck abhängig. Durch Verändern der Luftmenge kann die Niveaulage eingestellt werden.

Indem das zur Verfügung stehende Volumen vergrößert wird, können die Luftfedereigenschaften verbessert werden. Eine Volumenvergrößerung kann zumeist dadurch erzielt werden, dass die Luftfederkomponenten entsprechend groß ausgebildet werden. Da der zur Verfügung stehende Bauraum für die Luftfederkomponenten oft sehr beschränkt ist, müssen diese für eine vernünftige Volumenausnutzung oft mehrteilig ausgeführt sein.

Ferner ist eine mehrteilige Ausgestaltung der Luftfederkomponenten allein schon aus fertigungstechnischen Gründen erforderlich. Denn Luftfederkomponenten werden heutzutage aus Gewichts- und Kostengründen zumeist aus Kunststoff im Spritzgußverfahren oder im Schleudergußverfahren hergestellt. Zur Erhöhung der Steifigkeit und Belastbarkeit eines aus Kunststoff gefertigten Abrollkolbens sind dabei oftmals innenliegende Verstärkungsrippen erforderlich. Die sich dabei ergebenden Hinterschneidungen lassen sich bei einteilig hergestellten Luftfederkomponenten nur schwer oder zumeist gar nicht entformen. Dadurch ist eine mehrteilige Ausgestaltung der Luftfederkomponente notwendig.

Eine zweiteilige beziehungsweise mehrteilige Ausgestaltung hat jedoch den Nachteil, dass besondere konstruktive Maßnahmen zur Abdichtung und verliersicheren Verbindung der Einzelteile ergriffen werden müssen. Insbesondere ist darauf zu achten, dass an der Fügestelle der beiden Einzelteile eine ausreichende Dichtheit gegeben ist, um eine einwandfreie Funktion der Luftfeder zu gewährleisten.

DE 10 2011 050 103 A1, DE 10 2007 035 640 A1 und EP 1 589 253 A1 offenbaren Abrollkolben für eine Luftfeder, die zwei Bauteile aufweisen, wobei die Bauteile durch Schweißen miteinander verbunden sind. DE 10 2011 050 103 A1 zeigt dazu an den Bauteilen korrespondierende Fügebereiche, an denen aufschmelzbare Vorsprünge vorgesehen sind.

Ferner geht aus WO 98/46370 A1 ein Abrollkolben für eine Luftfeder hervor, der aus zwei Bauteilen gebildet ist, wobei auf die Fügebereiche der Bauteile eine auf Polyester basierende Pulverschicht aufgetragen wird, die mittels einer Wärmebehandlung aufgeschmolzen wird, um so eine Schweißverbindung der Bauteile zu bilden.

Darüber hinaus geht aus US 5,298,713 A ein Fügeprozess hervor, bei dem unter Verwendung eines inerten Gases zugeführtes Material in einer Extruderschnecke plastifiziert wird, um zwei thermoplastische Teile miteinander stoffschlüssig zu verbinden.

Der Erfindung liegt daher die Aufgabe zugrunde, eine Luftfederkomponente, insbesondere eine druckführende Luftfederkomponente zu schaffen, die trotz ihrer Mehrteiligkeit eine ausreichende Dichtheit, Bauteilfestigkeit, Temperatur und Alterungsbeständigkeit aufweist und gleichzeitig kostengünstig in der Herstellung ist. Zur Lösung der Aufgabe wird eine Luftfederkomponente mit den Merkmalen des Anspruchs 1 vorgeschlagen.

Vorteilhafte Ausgestaltungen der erfindungsgemäßen Luftfederkomponente sind Gegenstand der abhängigen Ansprüche.

Die erfindungsgemäße Luftfederkomponente umfasst mindestens zwei Bauteile, die korrespondierende Fügebereiche aufweisen, wobei die Fügebereiche stoffschlüssig mittels Heißgasschweißen unter inerter Atmosphäre miteinander verbunden sind, wobei an den Fügebereichen aufschmelzbare Vorsprünge vorgesehen sind und wobei wenigstens eines der Bauteile eine Schweißnahtverdeckung aufweist, die einen Fügespalt abdeckt.

Bevorzugt erfolgt der Stoffschluss unter Ausbildung einer Schweißnaht. Die stoffschlüssige Verbindung der beiden Bauteile unter inerter Atmosphäre ermöglicht, eine aus mehreren Bauteilen bestehende druckführende Luftfederkomponente zu erzeugen, die im Bereich der Fügestelle eine ausreichende Dichtheit, Festigkeit sowie Temperatur und Alterungsbeständigkeit aufweist. Ferner gewährleistet die stoffschlüssige Verbindung unter inerter Atmosphäre eine große gestalterische Freiheit der Fügebereiche bzw. der Verbindungsstellen. Die Fügebereiche können sowohl am äußeren Umfang, insbesondere an den Randabschnitten des Bauteils als auch im Inneren des Bauteils angeordnet sein. Ferner können die Fügebereiche eben ausgebildet sein, aber auch eine dreidimensionale Ausgestaltung aufweisen. Zudem ist vorteilhaft keine Nachbearbeitung der Fügebereiche vor dem Fügen erforderlich. Des Weiteren schützt die inerte Atmosphäre vor einer Verunreinigung der Fügebereiche, da eine Oxidation und/oder Reaktion der zu fügenden Bereiche verhindert wird. Dadurch weist die Schweißnaht eine hohe Festigkeit und Dichtheit auf. Die Rippen und Stege sorgen für eine ausreichende Stabilität und Steifigkeit der Bauteile bzw. der Luftfederkomponente.

In einer vorteilhaften Ausgestaltung erfolgt der Stoffschluss durch Erwärmen und/oder Aufschmelzen und anschließendem Verpressen der Fügebereiche unter inerter Atmosphäre. Bevorzugt wird dabei eine Schweißnaht ausgebildet. Vorteilhaft wird als inerte Atmosphäre Stickstoff verwendet. Weiterhin vorteilhaft wird die inerte Atmosphäre in einer Umhausung erzeugt.

Die Fügebereiche sind mittels Heißgasschweißen miteinander verbunden. Durch Heißgasschweißen lassen sich Bauteile aus Kunststoff, insbesondere aus glasfaserverstärktem Kunststoff, derart stoffschlüssig verbinden, dass die Anforderungen für druckführende Luftfederkomponenten, wie beispielsweise Dichtheit, Bauteilfestigkeit, Temperatur und/oder Alterungsbeständigkeit, erfüllt werden. Beim Heißgasschweißen werden die beiden zu fügenden Bauteile, insbesondere deren Fügebereiche durch Heißgas erwärmt und/oder ausgeschmolzen bzw. plastifiziert und anschließend unter Druck miteinander gefügt. Die Erwärmung beziehungsweise Plastifizierung erfolgt beim Heißgasschweißen kontaktlos über Heißgas. Vorteilhaft bildet dabei das Heißgas die inerte Atmosphäre. Weiterhin vorteilhaft wird beim Heißgasschweißen Stickstoff als Heißgas verwendet. Durch die Verwendung von Stickstoff als Arbeitsgas werden die Bauteile während des Erwärmens beziehungsweise Plastifizierens vor einer Oxidation und/oder Reaktion geschützt.

Beim Heißgasschweißen werden die zu fügenden Bauteile in Haltevorrichtungen aufgenommen und zueinander beabstandet positioniert. Anschließend werden die Fügebereiche mittels eines heißen Gases, insbesondere Stickstoff, erweicht und/oder aufgeschmolzen beziehungsweise plastifiziert. Vorteilhaft wird das heiße Gas über Düsen auf die Fügebereiche aufgebracht. Danach werden die beiden Bauteile beziehungsweise die erwärmten oder plastifizierten Fügebereiche miteinander unter Druck verpresst. Durch Halten dieser Position sowie einer Abkühlung der erwärmten beziehungsweise plastifizierten Fügebereiche erfolgt durch Erstarren ein Stoffschluss zwischen den beiden Bauteilen unter Ausbildung einer Schweißnaht.

In einer alternativen Ausgestaltung erfolgt das Erwärmen mittels Infrarot, Spiegelaufheizung und/oder Induktion. Vorteilhaft erfolgt die Erwärmung entweder unter Vakuum oder unter Einsatz eines inerten Arbeitsgases, insbesondere Stickstoff, in einer entsprechenden Umhausung.

Vorteilhaft ragen die Rippen und/oder Stege von einer Gehäusewand der Bauteile radial nach innen und/oder außen ab. Dadurch kann das Bauteil so gestaltet werden, dass der Fügebereich beziehungsweise die Verbindungsstelle sowohl am äußeren Umfang als auch am inneren Umfang des Bauteils angeordnet ist.

Die Stege und/oder Rippen können eine näherungsweise T-förmige Grundform aufweisen. Hierdurch kann die Oberfläche der Fügebereiche vergrößert werden.

Erfindungsgemäß sind an den Fügebereichen aufschmelzbare Vorsprünge vorgesehen. Hierbei können die Fügebereiche direkt während des Spritzgussverfahrens hergestellt sein. Ferner können die Fügebereiche eben sein, aber auch eine dreidimensionale Ausgestaltung aufweisen. Die aufschmelzbaren Vorsprünge werden entweder durch Heißgas, Infrarot, Spiegelaufheizung und/oder Induktion erwärmt und/oder plastifiziert beziehungsweise aufgeschmolzen und bilden durch Verpressen und Erstarren eine Schweißnaht aus.

Ferner erfindungsgemäß weist wenigstens eines der Bauteile eine Schweißnahtverdeckung auf, die einen Fügespalt abdeckt. Vorteilhaft ist die Schweißnahtverdeckung als eine umlaufende Verdecklippe ausgebildet. Die Verdecklippe ragt dabei von einem der Bauteile, vorzugsweise von dessen Gehäusewand ab. Beim Verpressen der beiden Bauteile kontaktiert die Verdecklippe das andere Bauteil bzw. dessen Gehäusewand und verdeckt dadurch den Fügespalt. Somit verhindert die Verdecklippe einen Austritt der plastifizierten beziehungsweise aufgeschmolzenen Fügebereiche während des Verpressens. Dadurch ist es nicht mehr erforderlich, die Schweißnaht aufwändig nachzubearbeiten, da eine saubere Außenfläche der Luftfederkomponente geschaffen wird.

In einer vorteilhaften Ausgestaltung ragt die Schweißnahtverdeckung vom ersten Bauteil ab und liegt in einer korrespondierenden Aussparung am zweiten Bauteil ein. Vorteilhaft ist die Schweißnahtverdeckung als spitz zulaufende Verdecklippe ausgebildet, die in eine korrespondierende Schräge am gegenüberliegenden bzw. zweiten Bauteil während des Verpressens eingreift. Vorteilhaft wird hierdurch eine weitestgehend glatte Außenfläche geschaffen.

In einer vorteilhaften Ausgestaltung weist die Luftfederkomponente ein Bodenteil und ein Deckelteil auf, die stoffschlüssig zu einem Luftfedertopf verbunden sind. Weiterhin vorteilhaft sind die Teile unter inerter Atmosphäre, vorzugsweise mittels Heißgasschweißen stoffschlüssig verbunden.

Ferner kann die Luftfederkomponente ein Bodenteil, ein Deckelteil und eine dazwischen angeordnete Trennwand aufweisen, wobei das Deckelteil und das Bodenteil mittels der Trennwand stoffschlüssig zu einem Zusatzvolumenbehälter verbunden sind. Die Teile können unter inerter Atmosphäre, vorzugsweise mittels Heißgasschweißen stoffschlüssig verbunden sein. Vorteilhaft teilt die Trennwand den Zusatzvolumenbehälter in mehrere Schaltvolumen, die über in das Boden- und Deckelteil integrierte Schaltventile gesteuert werden können. Dadurch kann die Luftfedersteifigkeit gespreizt werden. Ferner kann die als Zusatzvolumenbehälter ausgebildete Luftfederkomponente mehrere Trennwände aufweisen, die eine Unterteilung in mehrere Kammern ermöglichen.

In vorteilhafter Ausgestaltung weist die Luftfederkomponente ein Deckelteil und ein Abrollkolbenteil auf, die stoffschlüssig zu einem Abrollkolben verbunden sind. Vorteilhaft sind die Teile unter inerter Atmosphäre, vorzugsweise mittels Heißgasschweißen stoffschlüssig verbunden. Der Abrollkolben, insbesondere das Abrollkolbenteil, kann doppelwandig ausgeführt sein, um so eine mit Luft gefüllte Kammer zu bilden, die mit einer Kammer des Zusatzvolumenbehälters verbunden sein kann. Dadurch wird ein noch größeres Schaltvolumen und damit einhergehend eine große Spreizung der Luftfedersteifigkeit ermöglicht. Der Abrollkolben ist vorteilhaft derart ausgestaltet, dass ein Dämpfer aufgenommen werden kann.

Der Zusatzvolumenbehälter ist mit einem Abrollkolben stoffschlüssig, formschlüssig und/oder kraftschlüssig verbunden. Vorteilhaft sind sowohl Innen- als auch Außenwand des Abrollkolbens stoffschlüssig mit dem Zusatzvolumenbehälter verbunden. Dies ist insbesondere dann möglich, wenn der Abrollkolben ebenfalls aus Kunststoff hergestellt ist. Eine kraftschlüssige Verbindung des Abrollkolbens mit dem Zusatzvolumenbehälter erfolgt dann, wenn dieser aus einem anderen Material, wie beispielsweise Metall hergestellt ist. Insbesondere erfolgt die formschlüssige Verbindung durch eine Verprägung des Abrollkolbens mit dem Zusatzvolumenbehälter. Der Abrollkolben kann einteilig als auch mehrteilig ausgebildet sein.

Vorteilhaft sind die Bauteile aus thermoplastischen Kunststoff, insbesondere aus glasfaserverstärktem thermoplastischen Kunststoff hergestellt. Weiterhin vorteilhaft ist der Abrollkolben aus Metall oder aus thermoplastischen Kunststoff, insbesondere aus glasfaserverstärktem thermoplastischen Kunststoff hergestellt. Als thermoplastischer Kunststoff wird bevorzugt PA 66 GF 30 verwendet. Die aus Kunststoff gefertigten Bauteile tragen zu einer Gewichtsreduzierung und damit einhergehend zu einer Kraftstoffeinsparung bei. Als Metall wird vorteilhaft Aluminium verwendet, das ebenfalls ein vergleichsweise geringes Gewicht aufweist.

Nachfolgend wird die erfindungsgemäße Luftfederkomponente anhand der beigefügten schematischen Zeichnungen näher erläutert. Hierbei zeigen:
- Fig. 1: einen Längsschnitt durch eine Luftfeder mit einer als Luftfedertopf ausgebildeten erfindungsgemäßen Luftfederkomponente;
- Fig. 2: eine perspektivische Darstellung des Luftfedertopfs mit einem Deckelteil und einem Bodenteil;
- Fig. 3: einen vergrößerten Ausschnitt eines Längsschnitts durch einen Fügebereich gemäß einer erste Ausführungsform;
- Fig. 4: einen vergrößerten Ausschnitt eines Längsschnitts durch einen Fügebereich gemäß einer zweiten Ausführungsform;
- Fig. 5: einen Längsschnitt durch ein Luftfederbein mit einer als Abrollkolben und einem Zusatzvolumenbehälter ausgebildeten erfindungsgemäßen Luftfederkomponente;
- Fig. 6: einen Längsschnitt durch die als Abrollkolben und Zusatzvolumenbehälter ausgebildete Luftfederkomponente;
- Fig. 7: eine perspektivische Darstellung der einzelnen Bauteile des Zusatzvolumenbehälters;
- Fig. 8: eine perspektivische Darstellung des als Abrollkolben und Zusatzvolumenbehälters ausgebildeten Luftfederkomponente; und
- Fig. 9: einen Längsschnitt durch eine als Zusatzvolumenbehälter ausgebildete erfindungsgemäße Luftfederkomponente und einen Abrollkolben aus Metall, die mittels Prägen miteinander verbunden sind.

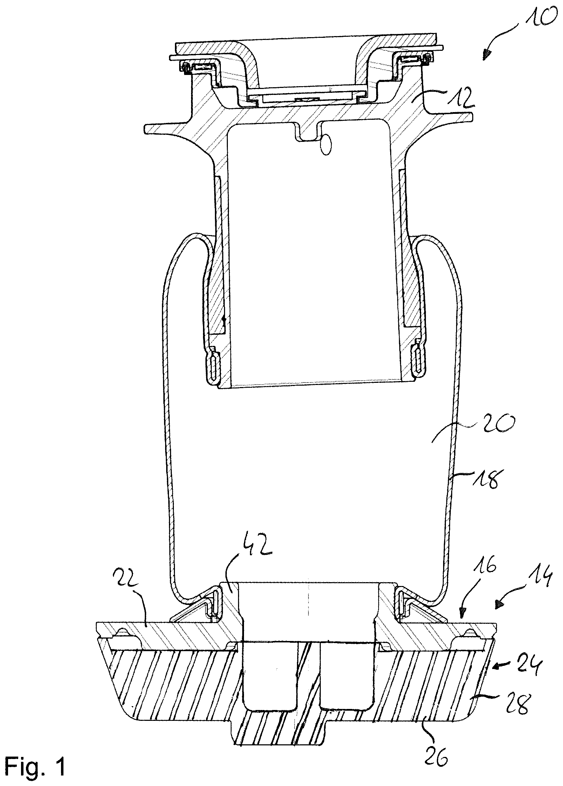

In Fig. 1 ist eine Luftfeder 10 im Längsschnitt dargestellt, die bei einem nicht dargestellten Kraftfahrzeug zwischen dem Fahrwerk und der Karosserie eingesetzt wird.

Die Luftfeder 10 weist einen Abrollkolben 12, eine erfindungsgemäße Luftfederkomponente 14, die vorliegend als Luftfedertopf 16 ausgebildet ist, und einen Luftfederbalg 18, der mit einem ersten freien Ende an dem Abrollkolben 12 unter Ausbildung einer Rollfalte und mit einem zweiten freien Ende an dem Luftfedertopf 16 angebracht ist. Der Luftfederbalg 18 bildet dabei einen mit Luft gefüllten Luftfederinnenraum 20 aus. Während eines Ein- und Ausfederungsvorgangs rollte der Luftfederbalg 16 an der Außenseite des Abrollkolbens 12 ab.

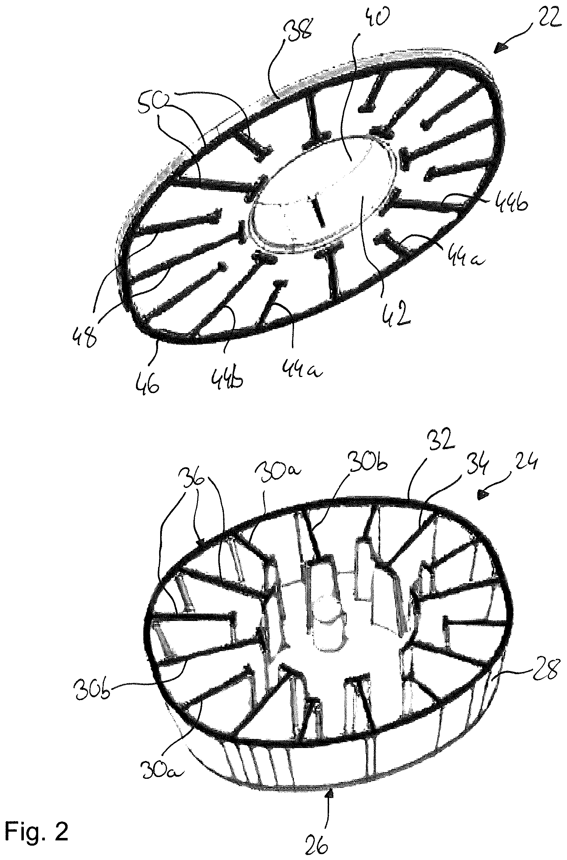

Wie aus Figur 2 ersichtlich ist, weist der Luftfedertopf 16 ein Deckelteil 22 und ein Bodenteil 24 auf. Das Deckelteil 22 und das Bodenteil 24 sind aus glasfaserverstärktem thermoplastischen Kunststoff, insbesondere PA 66 GF 30, die stoffschlüssig mittels Heißgasschweißen miteinander verbunden sind.

Das Bodenteil 24 ist dabei näherungsweise topfförmig ausgebildet und weist einen Bodenabschnitt 26 und eine den Bodenabschnitt 26 umgebende Gehäusewand 28 auf. Von der Gehäusewand 28 erstrecken sich radial nach innen eine Vielzahl an Rippen 30a, 30b, die im Querschnitt näherungsweise T-förmig ausgebildet und stoffschlüssig mit dem Bodenabschnitt 26 und der Gehäusewand 28 verbunden sind. Wie insbesondere in Fig. 2 ersichtlich ist, ragen abwechselnd eine kurze Rippe 30a und eine lange Rippe 30b nach innen. Der Randabschnitt 32 der Gehäusewand 28 sowie die freien Enden 34 der Rippen 30a, 30b bilden einen ersten Fügebereich 36.

Das Deckelteil 22 ist aus einem Bodenabschnitt 38 gebildet, der zentral von einer Öffnung 40 durchbrochen ist, die, wie in Fig. 1 ersichtlich ist, von einer kreisförmigen Wandung 42 umgeben ist und an welche der Luftfederbalg 18 befestigt ist. Der Bodenabschnitt 38 weist ferner zu den Rippen 30a, 30b korrespondierende Stege 44a, 44b auf, die sich von einem Randabschnitt 46 des Bodenabschnitts 38 radial in Richtung der Öffnung 40 nach innen erstrecken. Der Randabschnitt 46 des Bodenabschnitts 38 und die freien Enden 48 der Stege 44a, 44b bilden einen zweiten Fügebereich 50.

Beim Heißgasschweißen werden die korrespondierenden Fügebereiche 36, 50 erwärmt und/oder aufgeschmolzen bzw. plastifiziert und anschließend zusammengedrückt. Nach dem Erstarren der Fügebereiche 36, 50 erfolgt unter Ausbildung einer nicht dargestellten Schweißnaht eine stoffschlüssige Verbindung von Deckelteil 22 und Bodenteil 24. Beim Heißgasschweißen werden die Fügebereiche 36, 50 mittels eines Heißgases erwärmt und/oder aufgeschmolzen bzw. plastifiziert, wobei bevorzugt Stickstoff als Arbeitsgas verwendet wird. Vorliegend sind die Fügebereiche 36, 50 eben ausgebildet.

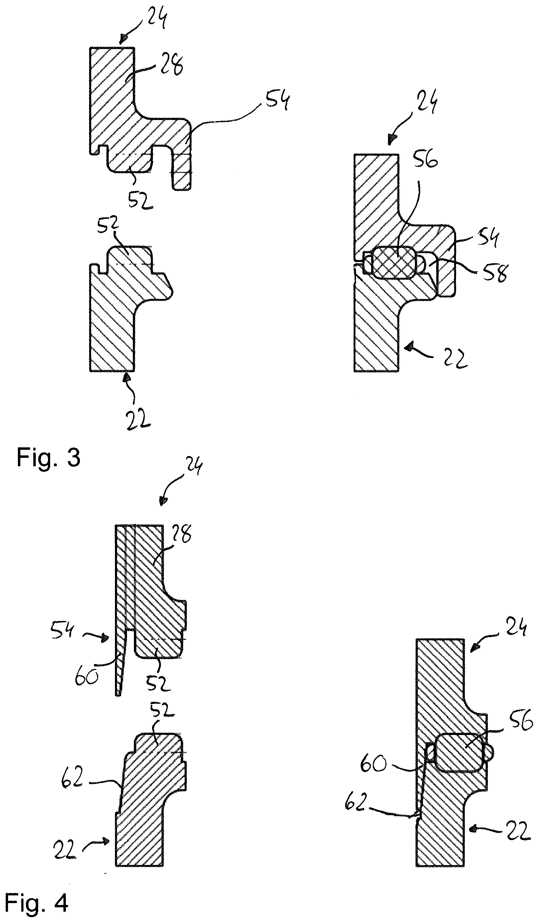

In Fig. 3 ist ein vergrößerter Ausschnitt eines Längsschnitts durch eine erste Ausführungsform der beiden Fügebereiche 36, 50 dargestellt. Die Fügebereiche 36, 50 weisen jeweils einen aufschmelzbaren Vorsprung 52 auf (linke Darstellung der Fig. 3). Ferner ragt von der Gehäusewand 28 des Bodenteils 24 eine Schweißnahtabdeckung 54 ab. Die aufschmelzbaren Vorsprünge 52 werden beim Heißgasschweißen erwärmt und/oder aufgeschmolzen beziehungsweise plastifiziert und zusammengedrückt, um so eine Schweißnaht 56 zu erzeugen (rechte Darstellung der Fig. 3). Beim Zusammendrücken kontaktiert die Schweißnahtabdeckung 54 das Deckelteil 22 und verdeckt dabei einen Fügespalt 58. Dadurch kann keine Schmelze austreten, so dass eine saubere Außenfläche geschaffen wird. Ferner ist es auch denkbar, die Schweißnahtabdeckung 54 am Deckelteil 22 anzuordnen.

In Fig. 4 ist eine zweite Ausführungsform der Fügebereiche 30, 50 dargestellt, die sich von der ersten Ausführungsform dadurch unterscheidet, dass die Schweißnahtabdeckung 54 als spitz zulaufende Verdecklippe 60 ausgebildet ist (linke Darstellung der Fig. 4), die nach dem Zusammendrücken in eine Schräge 62 des Deckelteils 22 eingreift, um so den Fügespalt 58 zu verdecken. Dadurch wird eine nach außen hin glatte Fläche geschaffen.

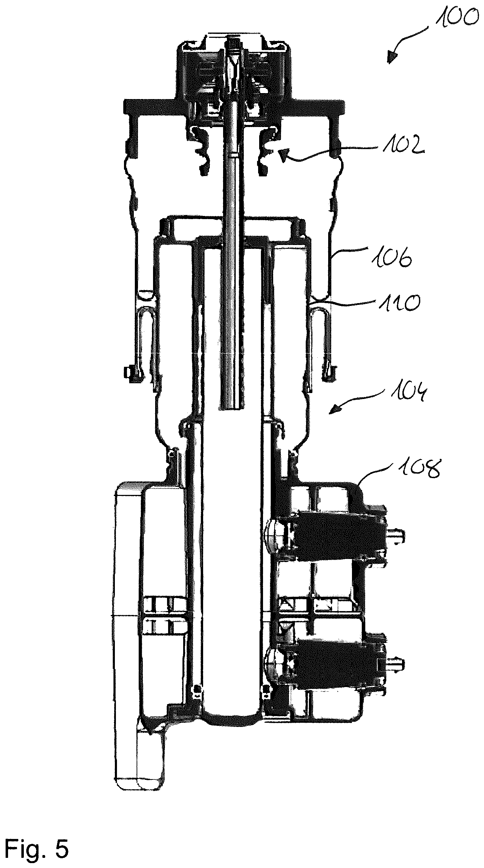

In Fig. 5 ist ein Luftfederbein 100 gezeigt, das einen Dämpfer 102, eine zweite erfindungsgemäße Luftfederkomponente 104 und einen den Dämpfer 102 und die Luftfederkomponente 104 miteinander verbindenden Luftfederbalg 106 aufweist.

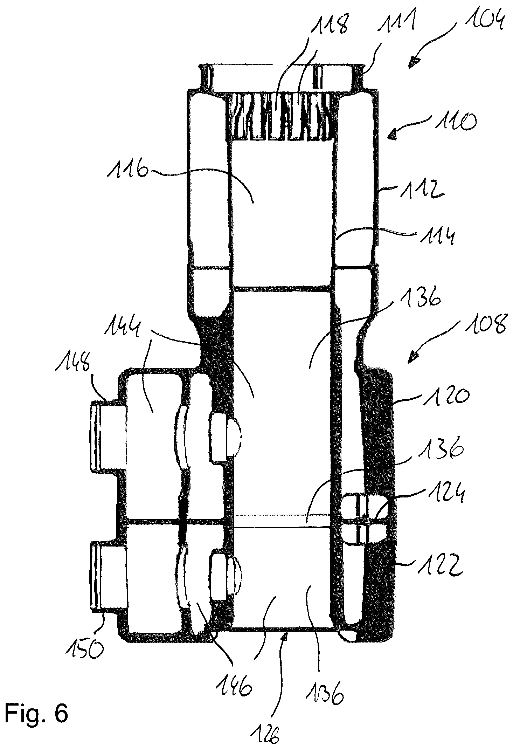

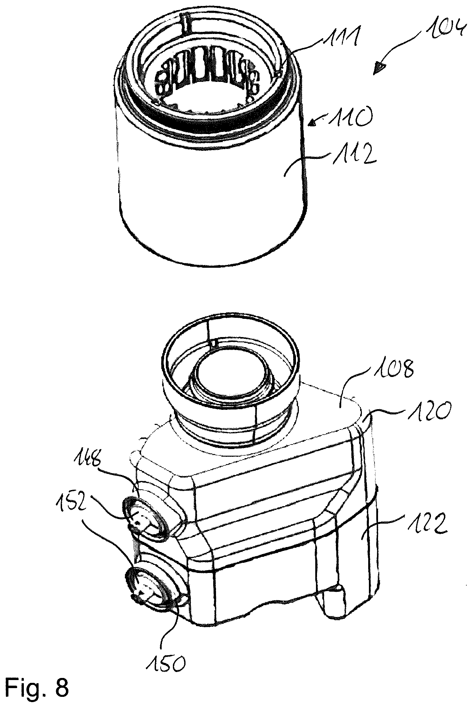

Wie insbesondere in den Fig. 6 und 8 ersichtlich ist, weist die Luftfederkomponente 104 einen Zusatzvolumenbehälter 108 und einen Abrollkolben 110 auf, die stoffschlüssig mittels Heißgasschweißen miteinander verbunden sind.

Der Abrollkolben 110 ist vorliegend doppelwandig ausgeführt und weist einen Befestigungsabschnitt 111 zum Befestigen des Luftfederbalgs 106, eine Außenwand 112, die als Abrollkontur für den Luftfederbalg 106 dient, und eine Begrenzungswand 114 auf. Durch die doppelwandige Ausgestaltung des Abrollkolbens 110 wird zwischen der Außenwand 112 und der Begrenzungswand 114 ein Schaltvolumen gebildet. Der Luftfederbalg 106 wird mittels eines nicht dargestellten Klemmringes an dem Befestigungsabschnitt 111 verklemmt. Ferner ist der Abrollkolben mit einem zentralen Durchgang 116 zur Aufnahme des Dämpfers 102 versehen. Zur radialen Führung des Dämpfers 102 weist der Abrollkolben 110 endseitig Rippen 118 auf. Vorliegend ist der Abrollkolben 110 einteilig ausgeführt. Ferner kann der Abrollkolben 110 auch zweteilig aus einem Deckelteil und einem Abrollkolbenteil gebildet sein, die stoffschlüssig miteinander mittels Heißgasschweißen verbunden sind.

Der Abrollkolben 110 ist mit dem Zusatzvolumenbehälter 108 stoffschlüssig durch Heißgasschweißen, wie zuvor erläutert, verbunden. Insbesondere sind das freie Ende der Außenwand 112 und das freie Ende der inneren Begrenzungswand 114 stoffschlüssig mit dem Zusatzvolumenbehälter 108 verbunden.

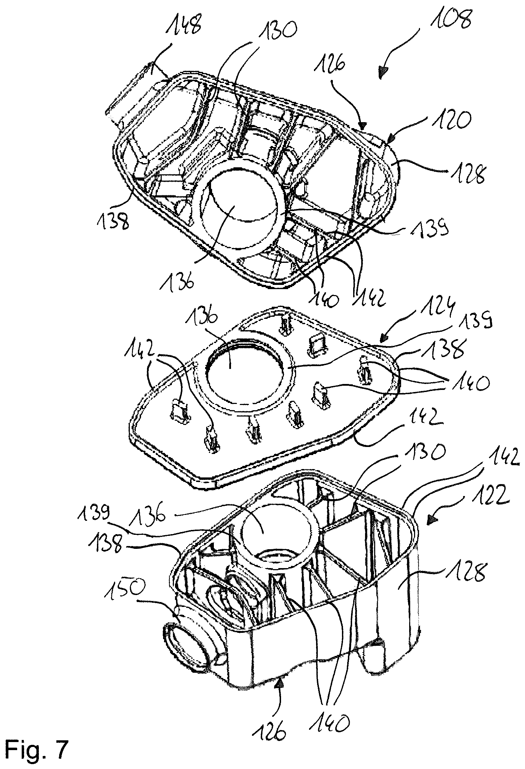

Der Zusatzvolumenbehälter 108 weist gemäß Fig. 7 ein Deckelteil 120, ein Bodenteil 122 und eine dazwischen angeordnete Trennwand 124 auf. Das Deckelteil 120 und das Bodenteil 122 sind näherungsweise topfförmig ausgebildet und umfassen einen Bodenabschnitt 126, eine Gehäusewand 128 und Rippen 130, die radial von der Gehäusewand 128 nach innen ragen. Die Trennwand 124 weist Stege 132 auf, die zu den Rippen 130 korrespondieren und die auf beiden Seiten der Trennwand 124 in axialer Richtung abragen. Des Weiteren weisen das Deckelteil 120, die Trennwand 124 und das Bodenteil 122 jeweils einen Durchgang 136 auf, die im zusammengesetzten Zustand mit dem Durchgang 116 des Abrollkolbens 110 übereinstimmen, um eine Aufnahme für den Dämpfer 102 zu bilden.

Das Deckelteil 120, das Bodenteil 122 und die Trennwand 124 sind stoffschlüssig mittels Heißgasschweißen, wie zuvor erläutert verbunden. Die Randabschnitte 138, die Umrandungen 139 der Durchgänge 136, die freien Enden 140 der Rippen 130 bzw. der Stege 132 bilden jeweils einen Fügebereich 142. Die Fügebereiche 142 können eben oder dreidimensional, wie in den Fig. 3 und 4 dargestellt ist, ausgebildet sein. Ferner kann zur Abdeckung eines Fügespalts von der Gehäusewand 128 des Deckelteils 120 und/oder Bodenteils 122 eine Schweißnahtverdeckung 54, wie sie in den Fig. 3 und 4 dargestellt ist, angeordnet sein.

Die Trennwand 124 unterteilt den Zusatzvolumenbehälter 108 in eine erste Kammer 144 und in eine zweite Kammer 146. Die erste Kammer 144 weist einen in die Gehäusewand 128 eingebrachten ersten Ventilsitz 148 und die zweite Kammer 146 weist einen in die Gehäusewand 128 eingebrachten zweiten Ventilsitz 150 auf. In die Ventilsitze 148, 150 sind, wie in Fig. 8 dargestellt ist, Schaltventile 152 integriert, um das in den Kammern 144, 146 befindliche Schaltvolumen zu steuern. Das Schaltvolumen der ersten Kammer 144 ist, wie in Fig. 6 dargestellt ist, mit dem Schaltvolumen des Abrollkolbens 110 verbunden und ermöglicht so ein größeres Schaltvolumen und damit eine größere Spreizung der Luftfedersteifigkeit zwischen den verschiedenen Schaltstellungen.

In der in den Figuren 5 bis 8 gezeigten Ausführungsform der erfindungsgemäßen Luftfederkomponente 104 sind sowohl der Abrollkolben 110 als auch der Zusatzvolumenbehälter 108 aus glasfaserverstärktem thermoplastischen Kunststoff, insbesondere PA 66 GF 30 hergestellt.

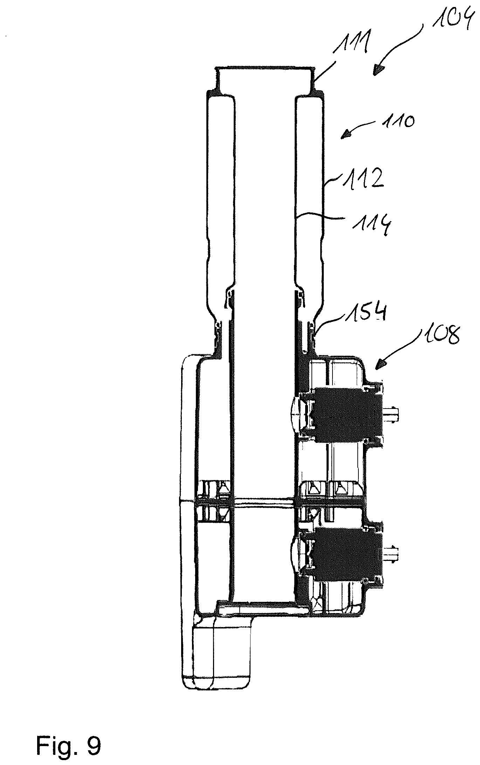

In Fig. 9 ist eine weitere Ausführungsform der Luftfederkomponente 104 dargestellt, die sich von der in den Fig. 5 bis 8 dargstellten Luftfederkomponente 104 dadurch unterscheidet, dass der Abrollkolben 110 aus Metall, insbesondere Aluminium, hergestellt ist, wobei anstelle der stoffschlüssigen Verbindung mit dem Zusatzvolumenbehälter 108 eine form- und/oder kraftschlüssige Verbindung zum Einsatz kommt. Bei der in Fig. 9 dargestellten Ausführungsform ist der Abrollkolben 110 mit dem Zusatzvolumenbehälter 108 mittels einer Verprägung 154 verbunden.

Die erfindungsgemäße Luftfederkomponente 14, 104 zeichnet sich durch die stoffschlüssige Verbindung der aus Kunststoff hergestellten Bauteile mittels Heißgasschweißen aus. Dadurch erfüllen die Luftfederkomponenten 114, 104 die an druckführende Luftfederbauteile gestellten Anforderungen hinsichtlich der Dichtheit, Bauteilfestigkeit, Temperatur und Alterungsbeständigkeit.

### Bezugszeichenliste

- 10: Luftfeder
- 12: Abrollkolben
- 14: Luftfederkomponente
- 16: Luftfedertopf
- 18: Luftfederbalg
- 20: Luftfederinnenraum
- 22: Deckelteil
- 24: Bodenteil
- 26: Bodenabschnitt
- 28: Gehäusewand
- 30a: kurze Rippe
- 30b: lange Rippe
- 32: Randabschnitt
- 34: freies Ende
- 36: erster Fügebereich
- 38: Bodenabschnitt
- 40: Öffnung
- 42: Wandung
- 44a: kurzer Steg
- 44b: langer Steg
- 46: Randabschnitt
- 48: freies Ende
- 50: zweiter Fügebereich
- 52: aufschmelzbarer Vorsprung
- 54: Schweißnahtabdeckung
- 56: Schweißnaht
- 58: Fügespalt
- 60: Verdecklippe
- 62: Schräge
- 100: Luftfederbein
- 102: Dämpfer
- 104: Luftfederkomponente
- 106: Luftfederbalg
- 108: Zusatzvolumenbehälter
- 110: Abrollkolben
- 111: Befestigungsabschnitt
- 112: Außenwand
- 114: Begrenzungswand
- 116: Durchgang
- 118: Rippen
- 120: Deckelteil
- 122: Bodenteil
- 124: Trennwand
- 126: Bodenabschnitt
- 128: Gehäusewand
- 130: Rippe
- 132: Steg
- 136: Durchgang
- 138: Randabschnitt
- 139: Umrandung
- 140: freies Ende
- 142: Fügebereich
- 144: erste Kammer
- 146: zweite Kammer
- 148: erster Ventilsitz
- 150: zweiter Ventilsitz
- 152: Schaltventil
- 154: Verprägung

## Patentansprüche

1. Luftfederkomponente (14, 104), insbesondere Abrollkolben (110), Zusatzvolumenbehälter (108) für einen Abrollkolben oder Luftfedertopf (16), mit mindestens zwei Bauteilen, die korrespondierende Fügebereiche (36, 50, 142) aufweisen, wobei die Fügebereiche (36, 50, 142) stoffschlüssig mittels Heißgasschweißen unter inerter Atmosphäre miteinander verbunden sind, wobei an den Fügebereichen (36, 50, 142) aufschmelzbare Vorsprünge (52) vorgesehen sind und wobei wenigstens eines der Bauteile eine Schweißnahtverdeckung (54) aufweist, die einen Fügespalt (58) abdeckt.

2. Luftfederkomponente nach Anspruch 1, **dadurch gekennzeichnet, dass** der Stoffschluss durch Erwärmen und/oder Aufschmelzen und anschließendem Verpressen der Fügebereiche (36, 50, 142) unter inerter Atmosphäre erfolgt.

3. Luftfederkomponente nach einem der Ansprüche 1 oder 2, **dadurch gekennzeichnet, dass** die Fügebereiche (36, 50, 142) aus korrespondierenden Randabschnitten (138), Rippen (30a, 30b, 118) und/oder Stegen (44a, 44b, 132) der Bauteile gebildet sind.

4. Luftfederkomponente nach Anspruch 3, **dadurch gekennzeichnet, dass** die Rippen (30a, 30b, 118) und/oder Stege (44a, 44b, 132) von einer Gehäusewand (28, 128) der Bauteile radial nach innen und/oder außen abragen.

5. Luftfederkomponente nach Anspruch 3 oder 4, **dadurch gekennzeichnet, dass** die Stege (44a, 44b, 132) und/oder Rippen (30a, 30b, 118) einen näherungsweise T-förmige Grundform aufweisen.

6. Luftfederkomponente nach einem der Ansprüche 1 bis 5, **dadurch gekennzeichnet, dass** die Schweißnahtverdeckung (54) vom ersten Bauteil abragt und in einer korrespondierenden Aussparung (62) am zweiten Bauteil einliegt.

7. Luftfederkomponente nach einem der Ansprüche 1 bis 6, **gekennzeichnet durch** ein Bodenteil (24) und ein Deckelteil (22), die stoffschlüssig zu einem Luftfedertopf (16) verbunden sind.

8. Luftfederkomponente nach einem der Ansprüche 1 bis 7, **gekennzeichnet durch** ein Bodenteil (122), ein Deckelteil (120) und eine dazwischen angeordnete Trennwand (124), wobei das Deckelteil (120) und das Bodenteil (122) mittels der Trennwand (124) stoffschlüssig zu einem Zusatzvolumenbehälter (108) verbunden sind.

9. Luftfederkomponente nach einem der Ansprüche 1 bis 8, **gekennzeichnet durch** ein Deckelteil und ein Abrollkolbenteil, die stoffschlüssig zu einem Abrollkolben (110) verbunden sind.

10. Luftfederkomponente nach Anspruch 9, **dadurch gekennzeichnet, dass** der Zusatzvolumenbehälter (108) mit dem Abrollkolben (110) stoffschlüssig, formschlüssig und/oder kraftschlüssig verbunden ist.

11. Luftfederkomponente nach einem der Ansprüche 1 bis 10, **dadurch gekennzeichnet, dass** die Bauteile aus thermoplastischen Kunststoff, insbesondere aus glasfaserverstärktem thermoplastischen Kunststoff hergestellt sind.

## Claims

1. Air spring component (14, 104), in particular a rolling piston (110), an additional volume container (108) for a rolling piston or an air spring pot (16), the air spring component having at least two components which have corresponding joint regions (36, 50, 142), the joint regions (36, 50, 142) being joined to one another by material closure by means of hot gas welding in an inert atmosphere, wherein fusible projections (52) are provided on the joint regions (36, 50, 142), and at least one of the components having a weld seam covering (54) which covers a joint gap (58).

2. Air spring component according to claim 1, **characterized in that** the material closure is effected by heating and/or melting and subsequent pressing of the joining regions (36, 50, 142) under an inert atmosphere.

3. Air spring component according to one of claims 1 or 2, **characterized in that** the joint regions (36, 50, 142) are formed from corresponding edge sections (138), ribs (30a, 30b, 118) and/or bars (44a, 44b, 132) of the components.

4. Air spring component according to claim 3, **characterized in that** the ribs (30a, 30b, 118) and/or bars (44a, 44b, 132) project radially inwards and/or outwards from a housing wall (28, 128) of the components.

5. Air spring component according to claim 3 or 4, **characterized in that** the bars (44a, 44b, 132) and/or ribs (30a, 30b, 118) have an approximately T-shaped basic form.

6. Air spring component according to any one of claims 1 to 5, **characterized in that** the weld seam covering (54) projects from the first component and is located in a corresponding recess (62) on the second component.

7. Air spring component according to any one of claims 1 to 6, **characterized by** a base part (24) and a cover part (22), which are connected by material closure to form an air spring pot (16).

8. An air spring component according to any one of claims 1 to 7, **characterized by** a base part (122), a cover part (120) and a partition (124) arranged therebetween, wherein the cover part (120) and the base part (122) are connected by material closure by means of the partition (124) to form an additional volume container (108).

9. Air spring component according to any one of claims 1 to 8, **characterized by** a cover part and a roll-off piston part, which are connected by material closure to form a roll-off piston (110).

10. Air spring component according to claim 9, **characterized in that** the additional volume container (108) is connected to the roll-off piston (110) by material closure, by form closure and/or by force closure.

11. Air spring component according to any one of claims 1 to 10, **characterized in that** the components are made of thermoplastic, in particular glass-fiberreinforced thermoplastic.

## Revendications

1. Composant de ressort pneumatique (14, 104), en particulier un piston roulant (110), un réservoir volumétrique supplémentaire (108) pour un piston roulant ou un pot de ressort pneumatique (16), avec au moins deux composants qui présentent des zones de joint (36, 50, 142) correspondantes, les zones de joint (36, 50, 142) étant reliées entre elles par liaison de matière par soudage au gaz chaud en atmosphère inerte, des saillies fusibles (52) étant prévues sur les zones de joint (36, 50, 142), et au moins l'un des composants présentant un revêtement de cordon de soudure (54) qui couvre un interstice de joint (58).

2. Composant de ressort pneumatique selon la revendication 1, **caractérisé en ce que** la liaison de matière est effectuée par chauffage et/ou fusion et ensuite par pressage des zones de joint (36, 50, 142) sous une atmosphère inerte.

3. Composant de ressort pneumatique selon l'une des revendications 1 ou 2, **caractérisé en ce que** les zones joint (36, 50, 142) sont formées par des sections de bord (138), des nervures (30a, 30b, 118) et/ou des barrettes (44a, 44b, 132) correspondantes des composants.

4. Composant de ressort pneumatique selon la revendication 3, **caractérisé en ce que** les nervures (30a, 30b, 118) et/ou les barrettes (44a, 44b, 132) font saillie radialement vers l'intérieur et/ou vers l'extérieur d'une paroi de boîtier (28, 128) des composants.

5. Composant de ressort pneumatique selon la revendication 3 ou 4, **caractérisé en ce que** les barrettes (44a, 44b, 132) et/ou les nervures (30a, 30b, 118) ont une forme de base approximativement en T.

6. Composant de ressort pneumatique selon l'une des revendications 1 à 5, **caractérisé en ce que** le revêtement du cordon de soudure (54) fait saillie du premier composant et est situé dans un évidement correspondant (62) sur le second composant.

7. Composant de ressort pneumatique selon l'une des revendications 1 à 6, **caractérisé par** une partie de base (24) et une partie de couvercle (22), qui sont connectées par liaison de matière pour former un pot de ressort pneumatique (16).

8. Composant de ressort pneumatique selon l'une quelconque des revendications 1 à 7, **caractérisé par** une partie de base (122), une partie de couvercle (120) et une cloison (124) disposée entre celles-ci, la partie de couvercle (120) et la partie de base (122) étant reliées par liaison de matière au moyen de la cloison (124) pour former un récipient de volume supplémentaire (108).

9. Composant de ressort pneumatique selon l'une des revendications 1 à 8, **caractérisé par** une partie de couvercle et une partie de piston de déroulement, qui sont reliées par liaison de matière pour former un piston de déroulement (110).

10. Composant de ressort pneumatique selon la revendication 9, **caractérisé en ce que** le réservoir volumétrique supplémentaire (108) est relié au piston de déroulement (110) par liaison de matière, par complémentarité de forme et/ou par force.

11. Composant de ressort pneumatique selon l'une quelconque des revendications 1 à 10, **caractérisé en ce que** les composants sont fabriqués en matière thermoplastique, en particulier en matière thermoplastique renforcée de fibres de verre.
